# EUROPÄISCHE PATENTSCHRIFT

(11) **EP 1 365 234 B1**
(45) Veröffentlichungstag und Bekanntmachung des Hinweises auf die Patenterteilung: **12.12.2012**
(21) Anmeldenummer: 03001647.1
(22) Anmeldetag: 24.01.2003
(51) Int. Cl.: G01N 27/419, G01N 33/00, F02D 41/06, F02D 41/14

(54) **Verfahren zur Korrektur des NOx-Signals eines NOx-Sensors**
Method for correcting the NOx signal of a NOx sensor
Procédé de correction du signal NOx d'un capteur de NOx

(30) Priorität: 24.01.2002 DE 10202869
(43) Veröffentlichungstag der Anmeldung: 26.11.2003
(73) Patentinhaber: Volkswagen Aktiengesellschaft, 38440 Wolfsburg (DE)
(72) Erfinder: Hahn, Hermann, Dr.-Ing., 30175 Hannover (DE); Schlüter, Jens, Dipl.-Ing., 32351 Stemwede (DE)
(74) Vertreter: Pohlmann, Bernd Michael

(56) Entgegenhaltungen:
- EP-A- 1 077 375
- WO-A-01/55565
- DE-A- 10 109 676
- DE-A- 19 810 483
- DE-A- 19 819 462
- US-A- 6 035 839

## Beschreibung

Die Erfindung bezieht sich auf ein Verfahren gemäß dem Oberbegriff des unabhängigen Patentanspruchs.

Bei Kraftfahrzeugen mit modernen Verbrennungsmotoren, die im Mager- und Schichtladebetrieb einen geringeren Kraftstoffverbrauch aufweisen, ist zur Erfüllung der gesetzlichen Abgasvorschriften eine zusätzliche Nachbehandlung der Abgase zur Reduzierung von Stickoxyd-Emissionen notwendig. Bevorzugt werden zur Lösung dieses Problems NOx-Speicherkatalysatoren eingesetzt, zu deren Überwachung NOx-Sensoren verwendet werden. Um eine hohe Emissionsstabilität des Motors zu erreichen, ist eine möglichst hohe Genauigkeit bei der Messung der NOx-Konzentration im Abgas, insbesondere für eine präzise Regelung des Magerbetriebs und des Speicherzyklus des NOx-Katalysators erforderlich. Aus der EP 0892265 A1 ist in diesem Zusammenhang bereits ein Gas-Sensor für die Messung von Gas-Oxyden bekannt, bei dem Abgas zur Messung in ein Doppel-Messkammersystem geführt wird. Die Messkammern weisen für die Messung Nernst-Zellen auf. Während in der ersten Messkammer Sauerstoffmoleküle dem Gasgemisch entzogen werden, wird in der zweiten Messkammer das zu messende Gas-Oxyd, beispielsweise Stickoxyd, in Stickstoff und Sauerstoff zerlegt. Eine an die erste Kammer angelegte Pumpzellenspannung wird auf einen konstanten Wert geregelt, der einer konstanten Sauerstoffkonzentration in dieser Kammer entspricht.

Idealerweise zeigt das Ausgangssignal eines NOx-Sensors exakt die tatsächliche NOx-Konzentration des Abgases an. Insbesondere sollte ein NOx-Sensor unter Bedingungen ohne NOx-Emission ein NOx-Signal = 0 liefern. Dies ist beispielsweise von Bedeutung für die Regelung des Speicherzyklus und für die Diagnose eines NOx-Speicherkatalysators mit hoher Einspeicherfähigkeit im Magerbetrieb, bei dem stromab des Speicherkatalysators bei nichtgeschädigtem Speicherkatalysator keine NOx-Emissionen auftreten.

Hierzu ist es bekannt, die Ausgangssignale eines NOx-Sensors zu korrigieren. So ist aus der DE 19819462 A1 ein Verfahren bekannt, bei dem die Ausgangssignale eines NOx-Sensors mit Hilfe von in Kennfeldern abgelegten Korrekturwerten korrigiert werden. Die Kennfelder sind insbesondere von der Sauerstoffkonzentration und deren Änderungsrate im Abgas sowie von der Temperatur des Sensors sowie des Abgases abhängig. Der Meßwert der NOx-Konzentration wird hierbei mit einem mulitplikativen Korrekturwert und einem additiven Korrekturwert korrigiert.

Aus der EP 1 077 375 A1 ist ferner ein Verfahren bekannt, bei dem die Stickoxydkonzentration in Abhängigkeit vom Wert der Sauerstoffkonzentration im Abgas und von der Änderungsrate der gemessenen Sauerstoffkonzentration korrigiert wird.

Aus dem Dokument DE 198 10 483 A1 ist bereits ein Verfahren zur Bestimmung des Sensor-Off-Sets bei HC- und/oder NOx-Sensoren bekannt, wobei das SensorSignal in Betriebzuständen der Brennkraftmaschine und des Katalysators in denen keine HC- und/oder NOx-Emmisionen auftreten, ausgelesen und als Off-Set-Signal gespeichert wird. Ferner ist aus dem Dokument DE 101 09 676 A1 eine NOx-Messzelle bekannt, bei der eine Pd-haltige Elektrode eingesetzt wird, um eine Sauerstoffakkumulation an der Elektrode der NOx-Messzelle zu verringern.

Ferner ist aus dem Dokument US 6,035,839 bekannt bei einem Sauerstoffsensor das Sensorsignal während einer bestimmten Einschwingzeit zu korrigieren.

Aufgabe der vorliegenden Erfindung ist es, ein Verfahren anzugeben, mit dem die Genauigkeit mit der die NOx-Konzentration im Abgas einer Brennkraftmaschine ermittelt wird, weiter verbessert werden kann.

Diese Aufgabe wird erfindungsgemäß mit den Merkmalen des unabhängigen Anspruches gelöst.

Der NOx -Sensor weist in einer bevorzugten Form der Erfindung zwei zur Messung der NOx -Konzentrationen im Abgas zusammenwirkende Messkammern auf, wobei die erste Messkammer eine Sauerstoff-Messpumpzelleneinrichtung zur Regelung des Sauerstoffpartialdrucks in der ersten Messkammer und die zweite Messkammer eine NOX -Messpumpzelleneinrichtung aufweist, welche ein die NOX - Konzentration im Abgas charakterisierendes NOX -Signal zur Verfügung stellt. Beide Messpumpzellen arbeiten vorzugsweise nach dem Nemst-Prinzip.

Die Erfindung geht von der Erkenntnis aus, dass ein NOx-Sensor unmittelbar nach seiner Aktivierung aus einem nichtbetriebenen Zustand für ein Zeitintervall von etwa 1 bis 5 Minuten einen mit einem systematischen Fehler behaftetes NOx-Signal abgibt. Die Abweichung des NOx-Signals in diesem Zeitintervall folgt im Wesentlichen der Form einer Abklingkurve. Bevorzugt bezieht sich die Erfindung auf eine Situation bei der sich in diesem Verhalten Sauerstoffdiffusionsprozesse im Sensorkörper, insbesondere in der Sensorkeramik und / oder den Sensorelektroden widerspiegeln. Ist der Sensor über mehrere Stunden unbeheizt und der Luft mit der üblichen Sauerstoffkonzentration von etwa 21 Prozent ausgesetzt gewesen, so sind nicht nur die Messkammern des NOx-Sensors mit Luft gefüllt, sondern es hat sich ebenfalls Sauerstoff im Sensorkörpermaterial akkumuliert. Von dort aus diffundiert der Sauerstoff weiter in das Innere der Sensorkeramik. Da im Inneren kein direkter Luftkontakt mehr besteht, sind die Diffusionsprozesse hier relativ langsam. Nach einer Aktivierung des NOx-Sensors ist zwar das in den Messkammem befindliche Gas auf eine vorgegebene Sauerstoffkonzentration eingestellt, jedoch erfolgt durch die Diffusion aus dem Sensorkörpermaterial eine Zufuhr von Sauerstoff, die wiederum zu einer Verfälschung des NOx-Signals führt. Diese Verfälschung des NOx-Signals wird mittels einer Korrekturfunktion korrigiert. Damit ist es möglich, unmittelbar nach einer Sensoraktivierung bereits NOx-Signale mit höherer Genauigkeit zu erhalten, womit wiederum die Emissionssicherheit der Brennkraftmaschine erhöht werden kann. Neben Sauerstoffdiffusionsprozessen können auch andere relativ langsame nichtstationäre Prozesse zu einem Abklingverhalten führen, welches mit der Erfindung kompensiert werden kann.

Gemäß einer bevorzugten Ausführungsform der Erfindung wird die Korrekturfunktion aus einem zeitabhängigen Kennfeld ausgelesen, welches als Eingangsparameter mindestens den Abgassauerstoff-Partialdruck, den Lambdawert und / oder eine Sensor- oder Abgastemperatur aufweist.

Gemäß einer weiteren Ausführungsform der Erfindung wird als Korrekturfunktion eine vorgegebene parametrisierte zeitlich abfallende Funktion, insbesondere eine Exponentialfunktion oder ein Polynom gewählt, wobei die Parameter zumindest von dem Abgassauerstoff-Partialdruck, dem Lambdawert und / oder einer Sensor- oder Abgastemperatur abhängig sind. Die beiden letzteren Ausbildungsformen ermöglichen eine unaufwendige und daher kostengünstige Implementierung des erfindungsgemäßen Verfahrens, beispielsweise in einem Motorsteuergerät.

Bei einer weiteren Ausführungsform der Erfindung wird die Korrekturfunktion in Abhängigkeit von einer Vorbehandlung des NOx-Sensors, insbesondere den Wert der Zeitspanne zwischen der Sensoraktivierung und der letzten zeitlich davor liegenden Deaktivierung und / oder der Betriebszeit des NOx-Sensors gewählt wird. Hiermit ist eine genauere Anpassung der Korrekturfunktion an die Sauerstoffdiffusionsprozesse im Sensorkörpermaterial sowie an Alterungsprozesse möglich.

Gemäß einer weiteren Ausbildungsform der Erfindung wird die Zeitabhängigkeit der Korrekturfunktion in Abhängigkeit von Betriebsparametern des Sensors und / oder der Brennkraftmaschine, insbesondere von dem Abgas-Sauerstoffpartialdruck, dem Lambdawert, einer Sensor- und / oder Abgastemperatur und / oder einer Vorbehandlung des NOx-Sensors skaliert. Dies entspricht der Verwendung von fiktiven, effektiv wirksamen Zeiteinheiten. In Abhängigkeit von den Betriebsparametern werden diese Zeiteinheiten verändert, während die grundlegende funktionale Abhängigkeit, der Korrekturfunktion von der Zeit die gleich ist. Hiermit ist es möglich eine geringere Anzahl von Korrekturfunktion, unter Umständen sogar nur eine einzige zu verwenden.

Zweckmäßigerweise wird zur Sensoraktivierung der NOx-Sensor auf eine vorgegebene Mindesttemperatur gebracht und / oder eine vorgegebene Sauerstoffmenge vom NOx-Sensor abgepumpt.

Wenn wie bei einer weiteren Ausführungsform der Erfindung eine Adaption der Korrekturfunktion an das Einschwingverhalten eines individuellen NOx-Sensor auf der Grundlage der Werte des NOx-Signals während eines vorgegebenen Zeitintervalls erfolgt, können Serienstreuungen der Sensoreigenschaften auf eine einfache Weise berücksichtigt werden.

Besonders einfach lässt sich eine Adaption erreichen, wenn für ein vorgegebenes Adaptionszeitintervall nach erfolgter Sensoraktivierung ein Integralwert des NOx-Signals gebildet und zur Adaption herangezogen wird. Ferner kann für ein vorgegebenes Adaptionszeitintervall eine Filterung des NOx-Signals zur Gewinnung eines Signals mit reduzierten Fluktuationen vorgenommen werden. Vorzugsweise ist hierfür eine Tiefpassfilterung, insbesondere eine gleitende Mittelwertbildung geeignet.

Die Qualität der Adaption lässt sich erhöhen, wenn Voraussetzung für eine Freigabe der Adaption das Vorliegen vorgegebener Motorbetriebszustände ist, vorzugsweise solcher, bei denen der NOx-Sensor NOx-Konzentrationen unterhalb eines vorgegebenen Schwellwertes ausgesetzt ist.

Die Qualität der Adaption kann weiter dadurch erhöht werden, dass eine Abweichung zwischen dem gefilterten Signal und der Korrekturfunktion ermittelt und mit einem vorgegebenen Schwellwert verglichen wird. Bei Überschreiten des Schwellwertes kann die Adaption verworfen und / oder zu einem späteren Zeitpunkt wiederholt werden.

Die Erfindung wird im folgenden anhand eines in Zeichnungen dargestellten Ausführungsbeispiels näher beschrieben aus dem sich auch unabhängig von der Zusammenfassung in den Patentansprüchen weitere Merkmale, Einzelheiten und Vorteile der Erfindung ergeben.

Es zeigen in schematischer Darstellung:
- Figur 1: eine Brennkraftmaschine mit zugeordneter Abgasanlage,
- Figur 2: einen NOx-Sensor,
- Figur 3: den zeitlichen Verlauf eines NOx-Signals sowie einer zugeordneten Korrekturfunktion.

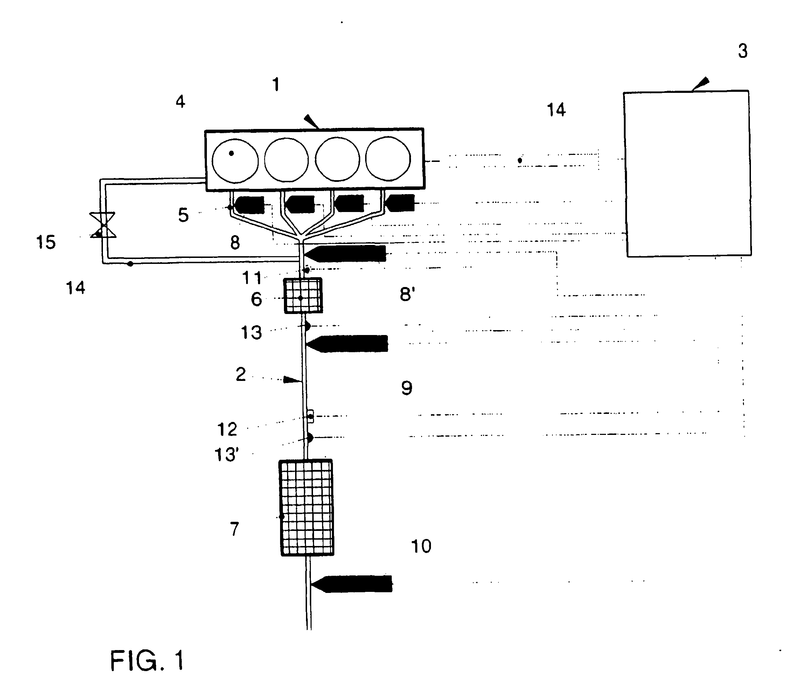

Figur 1 zeigt zur Veranschaulichung verschiedener Einbaulagen von NOx-Sensoren in schematischer Darstellung eine Brennkraftmaschine 1, beispielsweise ein magerlauffähiger Ottomotor oder eine Dieselbrennkraftmaschine, mit einer Abgasanlage 2 und einem Motorsteuergerät 3, vorzugsweise zum Betrieb eines Kraftfahrzeugs. Die Brennkraftmaschine 1 weist eine Anzahl von Zylinderbänken 4 auf (entsprechende Komponenten sind nur mit einem Bezugszeichen versehen), denen jeweils ein eigener Abgaspfad 5 nachgeschaltet ist. In der Abgasanlage 2 ist zur Konvertierung von schädlichen oder unerwünschten Komponenten des Abgases in andere Komponenten eine Abgasreinigungsvorrichtung mit einem Vorkatalysator 6 und einem Hauptkatalysator 7 angeordnet. Vorzugsweise ist der Vorkatalysator 6 als 3-Wege-Katalysator und der Hauptkatalysator 7 als NOx-Speicherkatalysator ausgebildet. Stromabwärts der Zylinderbänke 4 sind in den Abgaspfaden 5 NOx-Sensoren 8 angeordnet, mit denen die NOx-Konzentration des durch die Abgasanlage 2 geführten Abgases der Brennkraftmaschine 1 gemessen werden kann. Stromaufwärts des Vorkatalysators 6 ist zudem ein weiterer NOx-Sensor 8' angeordnet. In einem Bereich der Abgasanlage 2 zwischen dem Vorkatalysator 6 und dem Hauptkatalysator 7, stromabwärts des Vorkatalysators 6 und stromaufwärts des Hauptkatalysators 7, ist ein weiterer NOx-Sensor 9 angeordnet. Ein weiterer Sensor 10 ist stromabwärts des Hauptkatalysators 7 in der Abgasanlage 2 angeordnet. Ferner können bei einer Abgasreinigungsvorrichtung mit mehreren Teilen, Sensoren stromauf oder stromab der jeweiligen Teile angeordnet sein.

Zusätzlich zu den erwähnten Sensoren sind stromaufwärts und stromabwärts des Vorkatalysators 6 und stromaufwärts des Hauptkatalysators 7 Lambda-Sonden 11 bzw. 12 sowie zur Ermittlung der Betriebstemperatur der Katalysatoreinrichtungen Temperatursensoren 13, 13' vorgesehen. Es versteht sich von selbst, dass alternativ oder zusätzlich weitere Temperatursensoren zur Messung der Betriebestemperatur der Abgasreinigungsvorrichtung oder von Teilen dieser vorgesehen sein können. Zur Abgasrückführung weist die Brennkraftmaschine 1 eine Abgasrückführeinrichtung 14 mit einem steuerbaren Ventil 15 auf.

Das Motorsteuergerät 3 erfasst in an sich bekannter Weise über nicht dargestellte weitere Sensoren Betriebsparameter der Brennkraftmaschine 1, wie beispielsweise Drosselklappenstellung, Abgasrückführungsrate, Zündzeitpunkt, Einspritzzeitpunkt von Vor- / Haupt- / Nacheinspritzungen, Einspritzdruck, Tumble-Klappenstellung, Ladedruck, Phasensteller der Nockenwelle, Drehzahl, Fahrpedalstellung, Last, Fahrgeschwindigkeit und dergleichen, und kann diese über (nicht dargestellte) Stellglieder gegebenenfalls beeinflussen, wobei zur Kommunikation zwischen dem Motorsteuergerät 3 und den Sensoren bzw. Stellgliedern ein Kabelsystem 14 oder dergleichen vorgesehen ist. Ferner umfasst das Motorsteuergerät 3 eine Lambda-Regeleinrichtung zur Regelung der Sauerstoffkonzentration im Abgas bzw. des Lambda-Werts.

Das Motorsteuergerät 3 erhält von den NOx-Sensoren NOx-Signale mit denen die NOx-Rohemissionen der Brennkraftmaschine 1 bzw. die NOx-Konzentration stromabwärts der Katalysatoreinrichtungen 6 und / oder 7 ermittelt werden können.

Der NOx-Speicherkatalysator 7 wird üblicherweise in einem Speicherzyklus betrieben, der zumindest einen üblicherweise langsamen Absorptionsmodus und einen schnelleren Regenerationsmodus umfasst. Die absorptive Speicherung erfolgt dabei bei einem Lambda-Wert >1, die Ausspeicherung zu einem späteren Zeitpunkt bei einem Lambda-Wert <1 oder =1.

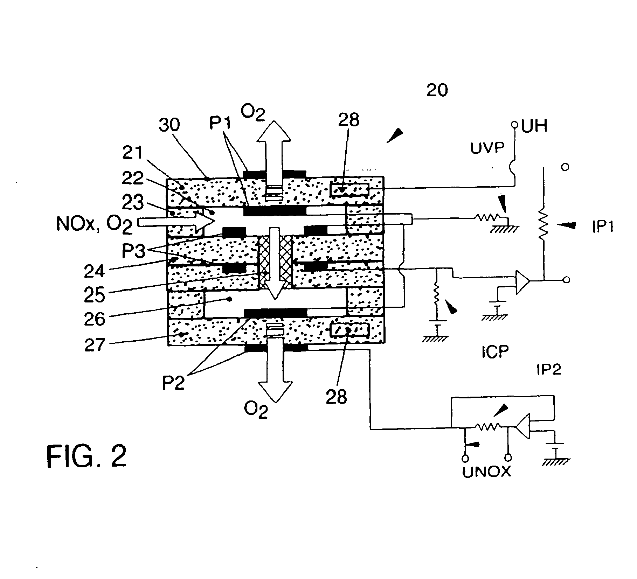

Der in Figur 2 dargestellte NOx-Sensor 20 zur Messung der NOx-Konzentration im Abgas besteht aus einem Sensorkörper 30 mit einer Festkörperelektrolyt-Keramik und ist als Doppelkammersensor mit einer ersten und zweiten Messkammer 22, 26 ausgebildet. Über eine Diffusionsbarriere 23 kann ein Teil des Abgases mit NOx-, 02- und weiteren Komponenten die erste Messkammer 22 erreichen. Die Messkammer 22 weist eine nach dem Nemst-Prinzip arbeitende Sauerstoff-Messpumpzelle 21 mit Pumpelektroden P1 auf. Mittels letzterer kann der Sauerstoffgehalt in der Messkammer 22 verändert werden. Über eine weitere Diffusionsbarriere 25 gelangt Abgas in die zweite Messkammer 26. Diese weist eine ebenfalls nach dem Nernst-Prinzip arbeitende NOx-Messpumpzelle 27 mit Pumpelektroden P2 auf. Die im Abgas enthaltenen Stickoxyde werden durch ein spezielles Material der inneren P2 Elektroden katalytisch in die Komponenten N2 und 02 zerlegt. Zur Kalibrierung des Systems wird, eine O2-Referenzzelle 24 mit Elektroden P3 verwendet.

An die Sauerstoff-Messpumpzelle 21 wird eine Pumpspannung angelegt. Der Strom ICP wird so geregelt, dass ein konstanter, vorzugsweise stöchiometrischer Wert der Sauerstoff-Konzentration in der ersten Messkammer 22 resultiert. Aus dem Pumpstrom IP1 wird ein Breitband-Lambdawert berechnet. Die Spannung UVP entspricht einem Lambdasprungsignal. Über den Pumpzellenstrom IP2 der Messkammer 26 kann ein der NOx-Konzentration im Abgas entsprechendes Spannungssignal UNOX ermittelt werden. Es versteht sich von selbst, dass die Erfindung auch NOx-Sensoren mit anderer Geometrie und / oder Beschaltung umfasst.

Um eine für eine NOx -Messung erforderliche Mindesttemperatur von z.B. 740 Grad zu gewährleisten, weist der NOx-Sensor 20 nicht dargestellte Heizelemente auf, denen eine Heizspannung UH von einer nicht dargestellten Heizungseinrichtung zugeführt wird. ist. Eine zugeordnete nicht dargestellte Temperatur-Messeinrichtung gibt ein Temperatursignal ab, aus dem die NOx-Sensortemperatur ermittelbar wird.

Idealerweise zeigt das NOx-Signal des Sensors 20 die tatsächliche NOx-Konzentration in Abgas an. Tatsächlich wird jedoch die Genauigkeit der Messung durch eine Anzahl von Quereinflüssen beeinträchtigt. Insbesondere das Auftreten von Sauerstoffdiffusionsprozessen in Sensorkörpermaterial führt zu einem NOx-Light-Off-Verhalten des NOx-Signals. Dabei weicht das NOx-Signal für ein Zeitintervall von ca. 1 bis 5 Minuten vom tatsächlichen Wert ab. Die Abweichung zwischen dem NOx-Signal und dem tatsächlichen Wert folgt dabei der Form einer Abklingkurve. Dieses Verhalten tritt dann auf, wenn der NOx-Sensor aus einem nicht betriebenen in einen betriebenen Zustand versetzt wird. In unbetriebenen Zustand ist der NOx-Sensor im allgemeinen nicht bestromt und nicht geheizt. Zum Übergang in den betriebenen Zustand wird der Sensor aktiviert, was im allgemeinen eine Beheizung und Einregelung auf einen Solltemperaturwert, beispielsweise 740 Grad sowie das Anlegen und Auswerten der erwähnten Punktspannungen und -ströme entsprechend einem Bestrormungsprotokoll umfasst. Hat der Sensor vor seiner Aktivierung mehrere Stunden unbeheizt an der Luft verbracht, so sind nicht nur die Messkammem 22 und 26 mit Luft gefüllt, sondern es hat sich gleichfalls Sauerstoff an den Elektroden P1, P2 und P3 angesammelt. Von dort aus erfolgen Diffusionsprozesse in das Innere der Sensorkeramik. Diese Diffusionsprozesse sind insbesondere abhängig vom Sauerstoffpartialdruck des Gases dem der Sensor ausgesetzt ist sowie von der Gas- und der Sensortemperatur. Nach erfolgter Sensoraktivierung beinträchtigen diese Sauerstoffdiffusionsprozesse in der Sensorkeramik und / oder den Sensorelektroden die Messgenauigkeit, bis ein stationärer Zustand erreicht ist.

Die Erfindung geht von einem Modell der Verfälschung des NOx-Signals nach der Inbetriebnahme des Sensors aus, das den aktuellen Sättigungsgrad des Sensors mit Sauerstoff berücksichtigt und daran eine Korrektur des NOx-Signals ableitet.

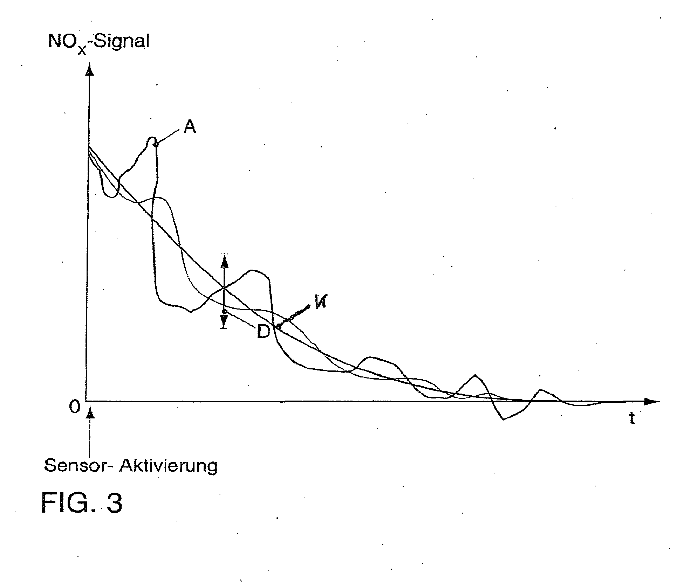

Figur 3 zeigt in einer vereinfachten Darstellung den zeitlichen Verlauf eines ungefilterten NOx-Signals (A) nach erfolgter Sensoraktivierung. Es ist dabei ersichtlich, dass das Signal A die Form einer Abklingkurve aufweist. Dem Abklingverhalten sind zeitliche Fluktuationen des NOx-Signals überlagert. Erfindungsgemäß wird nach der zum Zeitpunkt T=O vorgenommenen Sensoraktivierung für ein vorgegebenes Zeitintervall des NOx-Signals gemäß einer Korrekturfunktion, in Figur 3 mit K bezeichnet, korrigiert. Zur Korrektur wird das NOx-Signal mit einem gemäß der Funktion K bestimmten zeitabhängigen Offset beaufschlagt.

Die Korrekturfunktion wird aus einem zeitabhängigen Kennfeld ausgelesen, das beispielsweise in einem Speicher im Motorsteuergerät 3 abgelegt wird. Das Kennfeld weist als Eingangsparameter mindestens den Lambdawert des Abgases bzw. den Sauerstoffpartialdruck auf. Ebenso ist es zweckmäßig als Eingangsparameter eine Sensor- oder Abgastemperatur zu verwenden. Vorzugsweise werden die Werte dieser Parameter zum Zeitpunkt der Sensoraktivierung gewählt. Alternativ kann die Korrekturfunktion durch eine vorgegebene parametrisierte Funktion, die von einem Mikroprozessor berechnet wird, dargestellt werden. Die Funktionsparameter sind zumindest von dem Sauerstoffpartialdruck, dem Lambdawert und / oder der Sensor- oder der Abgastemperatur abhängig. Beispiele für eine solche Funktion sind eine Exponentialfunktion oder ein Polynom. Die Korrekturfunktion wird ferner in Abhängigkeit von der Vorbehandlung des NOx-Sensors gewählt. Insbesondere die Größe der Zeitspanne zwischen dem Zeitpunkt der Sensoraktivierung und dem Zeitpunkt der letzten davor liegenden Deaktivierung des Sensors wird zweckmäßigerweise berücksichtigt, da diese auf die Sauerstoffdiffusionsprozesse im Sensorkörpermaterial Einfluss nehmen. Alterungsprozesse des Sensors können ebenfalls zu einer Veränderung des Einschwingverhaltens führen, so dass in einer weiteren Ausführungsform der Erfindung die Gesamtbetriebszeit des Sensor bei der Wahl der Korrekturfunktion mit einbezogen wird.

Zur Vereinfachung des Verfahrens ist es sinnvoll, das NOx-Abklingverhalten nicht in Abhängigkeit von der realen Zeit zu beschreiben, sondern eine fiktive oder effektiv wirksame Zeit zu Grunde zu legen. Hierzu wird die Zeitabhängigkeit der Korrekturfunktion in Abhängigkeit von Betriebsparametern des Sensors und / oder der Brennkraftmaschine skaliert. Es kann dann mit einer einzigen oder mit wenigen Formen von Korrekturfunktionen ein weites Spektrum von Randbedingungen, die das Einschwingverhalten des Sensors beeinflussen berücksichtigt werden. So ist zum Beispiel zu erwarten, dass bei Betrieb des Sensors in Luft ein sehr langsames NOx-Abklingverhalten auftritt, da das Sauerstoffpartialdruckgefälle in diesem Fall nur sehr gering ist. In diesem Falle wird ein kleiner Zeitskalierfaktor gewählt (< 1). Das Abklingverhalten wird so zeitlich verlängert. Umgekehrt kann bei Betrieb des Sensors unter Bedingungen mit Sauerstoffmangel erwartet werden, dass der Abklingvorgang schneller vonstatten geht, da ein größeres Sauerstoffpartialdruckgefälle vorliegt. In diesem Fall wird man einen Zeitfaktor > 1 wählen. Die Zeitskalierung kann auch in Abhängigkeit von der Vorbehandlung des Sensors variiert werden, da die Vorbehandlung sich auf die Sauerstoffdiffusion im Sensorkörpermaterial auswirkt. War z.B. der Sensor vor seiner Aktivierung mehrere Stunden unter sauerstofffreien Bedingungen gelagert, so wird auch kein oder nur ein kurzes NOx-Einschwingverhalten auftreten. Aus diesem Grund ist es zweckmäßig, dass die Skalierung auch eine Verschiebung des Startwertes der Korrekturfunktion umfasst. Ferner kann der aktuelle Wert der fiktiven Zeit gespeichert werden, zu dem der Sensorbetrieb beendet wird. Auf dieser Basis kann eine erneute Skalierung bei erneuter Sensoraktivierung durchgeführt werden.

Da das obenbeschriebene Abklingverhalten von individuellen Sensor zu Sensor auf Grund von Fertigungstoleranzen innerhalb einer Serie unterschiedlich stark ausgeprägt sein kann, wird in einer weiteren Ausführungsform der Erfindung eine Adaption der Korrekturfunktion an das Einschwingverhalten eines einzelnen Sensors durchgeführt. Grundlage dieser Adaption sind die Werte des NOx-Signals während eines vorgegebenen Zeitintervalls nach erfolgter Sensoraktivierung. Die Adaption kann bei Einbau des NOx-Sensors in die Abgasanlage der Brennkraftmaschine oder bei einem Werkstattaufenthalt erfolgen. Ferner ist auch eine On-Board-Adaption möglich.

Bei einer bevorzugten Ausführungsform der Erfindung wird zur Adaption der Korrekturfunktion ein Integralwert des NOx-Signals gebildet und mit dem Integralwert der Korrekturfunktion über das Adaptionszeitintervall verglichen. Durch Variation der Parameter der Korrekturfunktion wird die Abweichung beider Integralwerte minimiert.

Bei einer weiteren Ausführungsform der Erfindung wird das NOx-Signal zur Adaption der Korrekturfunktion einer Filterung unterzogen, um ein Signal mit reduzierten Fluktuationen zu gewinnen. Hierbei wird vorzugsweise eine Tiefpassfilterung verwendet, die höher frequente Fluktuationen im NOx-Signal beseitigt. Ein einfaches Verfahren zur Filterung besteht in der Bildung eines gleitenden Mittelwertes, bei dem die Werte des Signals mit reduzierten Fluktuationen nach folgender Rechenvorschrift iterativ bestimmt werden: Aktuell ausgegebener Wert = vorheriger ausgegebener Wert + (aktueller NOx-Signalwert - vorheriger ausgegebener Wert) * F, F = Filterfaktor. Bei einem Filterfaktor F nahe 1 wird der jeweilige aktuelle NOx-Signalwert kaum gefiltert. Ein solcher Filterfaktor ist für NOx-Signale mit nur geringen Fluktuationen geeignet. Bei stärkeren Fluktuationen wird ein kleinerer Filterfaktor gewählt, der eine stärkere Glättung des NOx-Signals bewirkt. Da die Fluktuation des NOx-Signals von nicht stationären Fluktuationen des Lambdawertes abhängig sind, ist es zweckmäßig, den Wert des Filterfaktors in Abhängigkeit von der Größe der Lambdawertfluktuation zu wählen. Beispielsweise kann dies eine zeitliche Ableitung eines Zweipunkt- oder eines Breitbandlambdasignals sein. Beide Signale können von dem betreffenden NOx-Sensor selbst geliefert werden. Zur Adaption der Korrekturfunktion wird dann ein Maß der Abweichung zwischen der Korrekturfunktion und dem gefilterten NÖx-Signal gebildet und durch Variation der Parameter die Abweichung minimiert. Um eine Fehladaption zu vermeiden, ist es zweckmäßig, eine maximal zulässige Abweichung zwischen gefiltertem Signal und der Korrekturkurve zu definieren. Hierzu wird beispielsweise für jeden Zeitpunkt innerhalb des Adaptionsintervalls eine maximal zulässige Abweichung D als Schwellenwert festgelegt. Überschreitet die Abweichung diesen Schwellwert D, wird die Adaption verworfen. Sie kann zu einem späteren Zeitpunkt wiederholt werden. Ferner ist es sinnvoll zur Vermeidung von Fehladaptionen die Adaptionen nur bei Vorliegen vor vorgegebenen Motorbetriebszuständen durchzuführen. Insbesondere sollte eine Adaption nur dann durchgeführt werden, wenn der NOx-Sensor nicht tatsächlichen hohen vorhandenen NOx-Emissionen ausgesetzt ist. Dies trifft beispielsweise für einen Betrieb mit geschädigtem NOx-Katalysator oder bei einem Lambda < 1 Betrieb unmittelbar nach dem Motorstart zu.

Das erfindungsgemäße Verfahren ermöglicht eine Erhöhung der Messgenauigkeit eines NOx-Sensors durch Korrektur der Einschwingverfälschung in einem Zeitintervall nach erfolgter Sensoraktivierung und verbessert auf diese Weise die Emissionssicherheit von Brennkraftmaschinen.

## Patentansprüche

1. Verfahren zur Korrektur des NOx-Signals eines in der Abgasanlage einer Brennkraftmaschine anordenbaren NOx-Sensors in einem Zeitintervall nach einer Sensoraktivierung wobei der NOx-Sensor einen Sensorkörper mit einer Ssensor-Keramik aufweist und mittels einer Korrekturfunktion ein korrigiertes NOx-Signal gebildet wird, **dadurch gekennzeichnet, dass** die Korrekturfunktion aus einem zeitabhängigen Kennfeld ausgelesen wird, welches als Eingangsparameter mindestens einen Abgas-Sauerstoffpartialdruck, einen Lambdawert des Abgases und / oder eine Sensor- oder Abgastemperatur aufweist und/oder dass als Korrekturfunktion eine vorgegebene parametrisierte Funktion und die Funktionsparameter zumindest von dem Abgas-Sauerstoffpartialdruck, dem Lambdawert und /oder der Sensor- oder Abgastemperatur abhängig gewählt werden.

2. Verfahren nach Anspruch 1, **dadurch gekennzeichnet, dass** die Korrekturfunktion in Abhängigkeit von einer Vorbehandlung des NOx-Sensor, insbesondere von der Größe der Zeitspanne zwischen dem Zeitpunkt der Sensoraktivierung und dem Zeitpunkt der letzten davorliegenden Deaktivierung des Sensors und / oder der Gesamtbetriebszeit des NOx-Sensors gewählt wird.

3. Verfahren nach einem der vorhergehenden Ansprüche, **dadurch gekennzeichnet, dass** die Zeitabhängigkeit der Korrekturfunktion in Abhängigkeit von Betriebsparametem des Sensors und / oder der Brennkraftmaschine skaliert wird.

4. Verfahren nach einem der vorhergehenden Ansprüche, **dadurch gekennzeichnet, dass** der NOx-Sensor zur Sensoraktivierung auf eine vorgegebene Mindesttemperatur gebracht wird.

5. Verfahren nach einem der vorhergehenden Ansprüche, **dadurch gekennzeichnet, dass** in einem Inneren des Sensors zur Sensoraktivierung ein vorgegebener Sauerstoffpartialdruck hergestellt wird.

6. Verfahren nach einem oder vorhergehenden Ansprüche, **dadurch gekennzeichnet, dass** eine Adaption der Korrekturfunktion an das Einschwingverhalten eines einzelnen Sensors auf der Grundlage der Werte des NOx-Signals während eines vorgegebenen Zeitintervalls nach erfolgter Sensoraktivierung erfolgt.

7. Verfahren nach Anspruch 6, **dadurch gekennzeichnet, dass** zur Adaption der Korrekturfunktion über ein vorgegebenes Adaptionszeitintervall nach erfolgter Sensoraktivierung ein Integralwert des NOx-Signals gebildet wird aus dem Parameter der Korrekturfunktion berechnet werden.

8. Verfahren nach einem der Ansprüch 6 oder 7, **dadurch gekennzeichnet, dass** für ein vorgegebenes Adaptionszeitintervall eine Filterung, vorzugsweise eine Tiefpassfilterung, insbesondere eine gleitende Mittelwertbildung des NOx-Signals zur Gewinnung eines Signals mit reduzierten Fluktuationen vorgenommen wird und dass das Signal mit reduzierten Fluktuationen für eine Adaption der Korrekturfunktion herangezogen wird.

9. Verfahren nach Anspruch 8, **dadurch gekennzeichnet, dass** eine Abweichung zwischen dem gefilterten Signal und der Korrekturfunktion ermittelt, mit einem vorgegebenen Schwellwert verglichen und bei Überschreiten des Schwellwertes die Adaption verworfen und / oder zu einem späteren Zeitpunkt wiederholt wird.

10. Verfahren nach einem der Ansprüche 6 bis 9 **dadurch gekennzeichnet, dass** eine Freigabe der Adaption bei Vorliegen vorgegebener Motorbetriebszustände, vorzugsweise solcher, bei denen der NOx-Sensor NOx-Konzentrationen oberhalb eines vorgegebenen Schwellwertes ausgesetzt ist, erfolgt.

## Claims

1. Method for correcting the NOX signal of a NOX sensor, which can be arranged in the exhaust system of an internal combustion engine, in a time interval after an activation of the sensor, wherein the NOX sensor has a sensor body with a sensor ceramic element, and a corrected NOX signal is formed by means of a corrective function, **characterized in that** the corrective function is read out of a time-dependent characteristic map which has, as input parameters, at least one exhaust-gas oxygen partial pressure, a lambda value of the exhaust gas and/or a sensor or exhaust-gas temperature, and/or **in that**, as a corrective function, a predefined parameterized function is selected, and the function parameters are selected to be dependent at least on the exhaust-gas oxygen partial pressure, the lambda value and/or the sensor or exhaust-gas temperature.

2. Method according to Claim 1, **characterized in that** the corrective function is selected as a function of a preconditioning of the NOX sensor, in particular of the length of the time period between the time of the activation of the sensor and the time of the most recent preceding deactivation of the sensor, and/or the total operating time of the NOX sensor.

3. Method according to one of the preceding claims, **characterized in that** the time dependency of the corrective function is scaled as a function of operating parameters of the sensor and/or of the internal combustion engine.

4. Method according to one of the preceding claims, **characterized in that** the NOx sensor is brought to a predefined minimum temperature in order to activate the sensor.

5. Method according to one of the preceding claims, **characterized in that** a predefined oxygen partial pressure is generated in an interior of the sensor in order to activate the sensor.

6. Method according to one of the preceding claims, **characterized in that** an adaptation of the corrective function to the transient response of an individual sensor takes place on the basis of the values of the NOX signal during a predefined time interval after activation of the sensor.

7. Method according to Claim 6, **characterized in that**, for adaptation of the corrective function, an integral value of the NOx signal is formed over a predefined adaptation time interval after activation of the sensor, from which integral value parameters of the corrective function are calculated.

8. Method according to either of Claims 6 and 7, **characterized in that** filtering, preferably lowpass filtering and in particular floating average calculation, of the NOX signal is performed for a predefined adaptation time interval in order to obtain a signal with reduced fluctuations, and **in that** the signal with reduced fluctuations is used for an adaptation of the corrective function.

9. Method according to Claim 8, **characterized in that** a deviation between the filtered signal and the corrective function is determined and compared with a predefined threshold value, and if the threshold value is exceeded, the adaptation is rejected and/or repeated at a later time.

10. Method according to one of Claims 6 to 9, **characterized in that** an enablement of the adaptation takes place in the presence of predefined engine operating states, preferably engine operating states in which the NOX sensor is exposed to NOx concentrations above a predefined threshold value.

## Revendications

1. Procédé de correction du signal NOX d'un capteur de NOX disposé dans le système d'échappement d'un moteur thermique dans un intervalle de temps après une activation du capteur, le capteur de NOX comportant un corps de capteur avec une céramique de capteur et un signal de NOX corrigé étant formé au moyen d'une fonction de correction, **caractérisé en ce que** la fonction de correction est lue à partir d'un diagramme caractéristique dépendant du temps, comportant comme paramètre d'entrée au moins une pression partielle de l'oxygène dans le gaz d'échappement, une valeur lambda du gaz d'échappement et /ou une température de capteur ou de gaz d'échappement, et /ou **en ce qu'**on choisit une fonction paramétrée donnée comme fonction de correction et que les paramètres de fonction dépendent au moins de la pression partielle de l'oxygène dans les gaz d'échappement, de la valeur lambda et /ou de la température du capteur ou des gaz d'échappement.

2. Procédé selon la revendication 1, **caractérisé en ce que** la fonction de correction est choisie en fonction du prétraitement du capteur de NOx, notamment de l'importance du délai entre l'instant de l'activation du capteur et l'instant de la dernière désactivation précédente du capteur et /ou du temps de fonctionnement total du capteur de NOx.

3. Procédé selon une des revendications précédentes, **caractérisé en ce qu'**on met à l'échelle la dépendance vis-à-vis du temps de la fonction de correction en fonction de paramètres de fonctionnement du capteur et /ou du moteur thermique.

4. Procédé selon une des revendications précédentes, **caractérisé en ce que** pour l'activation du capteur, on amène le capteur de NOx à une température minimum donnée.

5. Procédé selon une des revendications précédentes, **caractérisé en ce que** pour l'activation du capteur, on établit à l'intérieur du capteur une pression partielle d'oxygène donnée.

6. Procédé selon une des revendications précédentes, **caractérisé en ce qu'**après activation avec succès du capteur, une adaptation de la fonction de correction au régime stabilisé d'un capteur unique s'opère sur la base des valeurs du signal NOx pendant un intervalle de temps donné.

7. Procédé selon la revendication 6, **caractérisé en ce que** pour l'adaptation de la fonction de correction sur un intervalle de temps d'adaptation donné après activation avec succès du capteur, on forme une valeur intégrale du signal NOx par calcul à partir du paramètre de la fonction de correction.

8. Procédé selon une des revendications 6 ou 7, **caractérisé en ce que** pour un intervalle de temps d'adaptation donné, on entreprend un filtrage, de préférence un filtrage passe-bas, notamment une formation glissante de valeur moyenne du signal NOx pour obtenir un signal ayant des fluctuations réduites, et **en ce qu'**on met à contribution le signal ayant des fluctuations réduites pour une adaptation de la fonction de correction.

9. Procédé selon la revendication 8, **caractérisé en ce qu'**on détermine un écart entre le signal filtré et la fonction de correction, qu'on le compare avec une valeur de seuil donnée et qu'on rejette l'adaptation lors du dépassement de à valeur de seuil et /ou qu'on la répète plus tard.

10. Procédé selon une des revendications 6 à 9, **caractérisé en ce qu'**une libération de l'adaptation s'opère lorsqu'il existe des états de fonctionnement donnés du moteur, de préférence ceux auxquels le capteur NOx est soumis à des concentrations de NOx supérieures à une valeur de seuil donnée.
